(19) Europäisches Patentamt
European Patent Office
Office européen des brevets

(11) Veröffentlichungsnummer : **0 002 474**
**B2**

# (12) NEUE EUROPÄISCHE PATENTSCHRIFT

(45) Veröffentlichungstag der neuen Patentschrift : **19.08.87**

(51) Int. Cl.[4] : **D 21 H 3/58**, C 08 G 69/48, C 08 G 73/02

(21) Anmeldenummer : **78101531.8**

(22) Anmeldetag : **04.12.78**

## (54) Amidgruppenhaltige Polyamine und ihre Verwendung bei der Papierherstellung.

(30) Priorität : **17.12.77 DE 2756431**

(43) Veröffentlichungstag der Anmeldung : **27.06.79 Patentblatt 79/13**

(45) Bekanntmachung des Hinweises auf die Patenterteilung : **16.02.83 Patentblatt 83/07**

(45) Bekanntmachung des Hinweises auf die Entscheidung über den Einspruch : **19.08.87 Patentblatt 87/34**

(84) Benannte Vertragsstaaten :
**BE CH DE FR GB IT NL SE**

(56) Entgegenhaltungen :
**DE-A- 1 771 043**
**DE-A- 1 906 450**
**DE-A- 2 162 493**
**DE-B- 1 771 814**
**DE-B- 2 502 874**
**DE-C- 1 177 824**
**GB-A- 1 035 296**
**Die Akte enthält technische Angaben, die nach dem Eingang der Anmeldung eingereicht wurden und die nicht in dieser Patentschrift enthalten sind.**

(73) Patentinhaber : **BAYER AG**
**Konzernverwaltung RP Patentabteilung**
**D-5090 Leverkusen 1 Bayerwerk (DE)**

(72) Erfinder : **Lehmann, Wolfgang, Dr.**
**Carl-Rumpff-Strasse 7**
**D-5090 Leverkusen (DE)**
Erfinder : **Müller, Friedhelm, Dr.**
**Zum Hahnenberg 62**
**D-5068 Odenthal (DE)**
Erfinder : **Cramm, Günther, Dr.**
**Jacob-Boehme-Strasse 11**
**D-5000 Köln 80 (DE)**
Erfinder : **Hammerström, Knut, Dr.**
**Dattenfelder-Strasse 38**
**D-5000 Köln 91 (DE)**
Erfinder : **Löbach, Wilfried, Dr.**
**Flutgraben 17**
**D-5300 Bonn 3 (DE)**

EP 0 002 474 B2

**Beschreibung**

Die vorliegende Erfindung betrifft wasserlösliche Polyamine eines Molekulargewichts von mindestens 2 500, die erhalten werden durch Umsetzung von

A) einem oder mehreren in Wasser löslichen oder dispergierbaren basischen Polyamiden, die durch Kondensation von mindestens zwei primäre Aminogruppen und mindestens eine sekundäre oder tertiäre Aminogruppe enthaltenden aliphatischen Polyaminen oder von Mischungen aus diesen Polyaminen und aus zwei primäre oder sekundäre Aminogruppen oder eine primäre oder eine sekundäre Aminogruppen enthaltenden aliphatischen, cycloaliphatischen, araliphatischen oder heterocyclischen Polyaminen mit gesättigten aliphatischen 4-10 Kohlenstoffatome enthaltenden Dicarbonsäuren bzw. mit deren funktionellen Derivaten und gegebenenfalls mit mindestens 3 Kohlenstoffatome enthaltenden ω-Aminocarbonsäuren oder deren Lactamen hergestellt worden sind,

B) einem oder mehreren Polyalkylenpolyaminen und

C) 1,2-Dichloräthan oder Epichlorhydrin, wobei als Komponente B Polyalkylenpolyamine der allgemeinen Formel

$$H_2N—[CH_2—\underset{\displaystyle R}{\underset{|}{CH}}—NH—]_xH$$

in der
x eine Zahl von 4 bis 2 500 und
R H oder $CH_3$ bedeuten,
oder Mischungen dieser Polyalkylenpolyamine mit Aminen der allgemeinen Formel

$$H_2N—[CH_2—\underset{\displaystyle R}{\underset{|}{CH}}—(CH_2—)_yNH—]_{x_1}H,$$

in der
Y gleich 0 ist und
$X_1$ eine Zahl von 1 bis 3 bedeuten, verwendet werden und sich bei der Umsetzung praktisch alle funktionellen Gruppen umgesetzt haben, und dass entweder die Verbindung C mit dem Gemisch von A und B umgesetzt wird, oder eine der beiden Komponenten A oder B mit C zu einem Vorkondensat und dann mit der anderen Komponente A oder B umgesetzt wird.

Die Erfindung betrifft ferner die Verwendung dieser wasserlöslichen Polyamine als Mittel zur Erhöhung der Retention von Fasern, Füllstoffen und Pigmenten sowie zur Beschleunigung der Entwässerung bei der Papierherstellung und zur Aufarbeitung von Papiermaschinenabwässern durch Filtration, Sedimentation und Flotation.

Zur Herstellung der erfindungsgemäßen wasserlöslichen Polyamine können sowohl höhermolekulare basische Polyamide, d. h. Polyamide, deren mittleres Molekulargewicht größer als 10 000 ist, als auch vorteilhafterweise niedermolekulare basische Polyamide mit einem mittleren Molekulargewicht kleiner als 10 000, insbesondere kleiner als 5 000, verwendet werden.

Als wasserlösliche oder dispergierbare basische Polyamide A kommen insbesondere in Betracht :

a) Umsetzungsprodukte von gesättigten aliphatischen $C_4$-$C_{10}$ Dicarbonsäuren, wie Bernsteinsäure, Glutarsäure, Adipinsäure, Diglykolsäure oder Sebazinsäure, oder deren funktionellen Derivaten, wie Anyhydride und Ester, mit aliphatischen Polyaminen, die mindestens 2 primäre Aminogruppen und mindestens eine sekundäre oder tertiäre Aminogruppe enthalten ; solche Amine sind z. B. Methyl-bis-(3-amino-propyl)-amin, Ethyl-bis-(3-aminopropyl)-amin, 2-Hydroxyäthyl-bis-(3-amino-propyl)-amin, N-(3-Amino-propyl)-tetramethylendiamin und N,N'-bis-(3-amino-propyl)-tetramethylendiamin, 3-(2-Aminoäthyl)-aminopropylamin, N,N'-bis-(3-aminopropyl)-äthylendiamin, 4,7,11-Triazatetradecan-1.14-diamin insbesondere aber Polyalkylenpolyamine der Formel

$$\underset{\displaystyle HN}{\overset{\displaystyle R_1}{|}}—(A—\underset{\displaystyle N}{\overset{\displaystyle R_2}{|}})_n—H,$$

in der
A einen $C_2$-$C_8$-Alkylenrest,

$R_1$ und $R_2$ unabhängig voneinander Wasserstoff oder einen gegebenenfalls durch eine Hydroxy- oder Aminogruppe substituierten $C_1$-$C_{10}$-Alkylrest und

n eine Zahl von 2-15

bedeuten, wie Di-propylen-(1,2)-triamin, Bis-(3-amino-propyl)-amin, Tri-propylen-(1,2)-tetramin und vor allem Diäthylentriamin, Triäthylentetramin und alle weiteren Polyäthylen polyamine o. g. Formel, bei der $R_1$ und $R_2$ = H, A = $CH_2CH_2$ und n = 5-15 sind sowie insbesondere ihre Gewische, vor allem die durch Abdestillation von Äthylendiamin, evtl. auch noch von Diäthylentriamin und Triäthylentetramin befreiten Umsetzungsprodukte von 1 Mol 1,2-Dichloräthan mit 4 bis 40 Mol Ammoniak (Houben-Weyl, 4. Auflage, XI/1, Seite 43 u. 44).

Als wasserlösliche basische Polyamide seien ferner genannt :

b) solche Umsetzungsprodukte, denen außer den unter a) angeführten Polyaminen noch 2 primäre oder 2 sekundäre Aminogruppen oder eine primäre und eine sekundäre Aminogruppe enthaltende aliphatische, cycloaliphatische, araliphatische oder heterocyclische Polyamine, wie Äthylendiamin, N-(2-Hydroxy-äthyl)-äthylendiamin, N,N'-Dimethyl-Äthylendiamin, 1,2-Diamino-propan, 1,6-Diamino-hexan, 1,4-Diamino-cyclohexan, 1,3-Bis-aminomethyl-benzol bzw. Piperazin, und außer den oben genannten gesättigten aliphatischen $C_4$-$C_{10}$-Dicarbonsäuren noch ε-Aminocarbonsäuren oder deren Lactame, z. B. 6-Aminocapronsäure und 8-Aminocaprylsäure bzw. 6-Caprolactam und 8-Capryllactam, zugrunde liegen.

Die unter a) und b) genannten basischen Polyamide werden in der Literatur als « Polyamidamine » bzw. « Polyamidoamine » bzw. « Polyamidpolyamine » bzw. « Polyaminopolyamide » bezeichnet.

Die zur Herstellung der unter a) genannten basischen Polyamide innezuhaltenden Mengenverhältnissen der in Betracht kommenden Komponenten von mehrwertigen Aminen und Dicarbonsäuren können den in der Literatur genannten Molverhältnissen von 0,8 bis 1,4 : 1 entsprechen. Jedoch kann es in manchen Fällen von Vorteil sein, über die angegebenen Grenzen bis zu einem Verhältnis um 0,8 bis 2,5 : 1 hinaus zu gehen. Ebenso kann die Aminmenge der unter b) genannten, unter Mitverwendung von ε-Aminocarbonsäuren oder deren Lactame herstellbaren Polyamidamine, über das erwähnte Maß hinaus erhöht werden.

Basische Polyamide dieser Art sind biespielsweise auch als Ausgangsverbindungen für die Umsetzung mit polyfunktionellen Verbindungen in den deutschen Patentschriften 1 177 824 und 1 771 814 beschrieben.

Als Polyalkylenpolyamine B der vorstehend genannten Formel seien vor allem die Polyäthylenpolyamine genannt, bei denen y für null steht wie z. B. Äthylendiamin, Propylendiamin-1,2, Diäthylentriamin, Dipropylentriamin, Triäthylentetramin, Tripropylentetramin, Tetraäthylenpentamin, Tetrapropylenpentamin, Pentaäthylenhexamin, Pentapropylenhexamin, Hexaäthylenhaptamin, Hexapropylenheptamin, Heptaäthylenoktamin, Heptapropylenoktamin und ihre Gemische sowie Polyäthylenpolyamine, die zudem noch einen oder mehrere Pyperazinringe enthalten, wie Aminoäthylpiperazin, Pentaäthylenpentamin, Oktaäthylenheptamin und deren Gemische, insbesondere aber

a) das bei der diskontinuierliche, (z. B. Houben-Weyl, 4. Auflage, XI/1, Seite 44), oder bei der kontinuierlichen (z. B. im GB-PS-1 147 984, US-PS-1 832 534 und 2 049 467) Umsetzung von 1,2-Dichloräthan mit wäßrigem Ammoniak, gegebenenfalls in Gegenwart von zugesetzten Äthylendiamin oder Diäthylentriamin (US-PS-2 769 841 u. DE-OS-1 668 922) erhaltene Polyäthylenpolyamin gemisch, das erhebliche Anteile an Tetraäthylenpentamin, Pentaäthylenhexamin, Hexaäthylenhexamin, Hexaäthylenheptamin, Heptaäthylenheptamin und höhere Amine enthält, und vor allem

b) das nach Abdestillieren von Äthylendiamin, evtl. auch noch von Diäthylentriamin und Triäthylentetramin aus dem gemäß a) hergestellten Basengemisch verbleibende Polyäthylenpolyamingemisch.

c) die durch Kondensation von 1,2-Dichloräthan mit dem oben genannten Polyäthylenpolyaminen, einzeln oder im Gemisch, herstellbaren mehrwertigen oligomeren Amine mit einem mittleren Molekulargewicht von 1 000 bis 10 000, insbesondere 2 000 bis 5 000.

d) die durch Polymerisation von 1,2-Alkyleniminen erhältlichen mehrwertigen Amine mit einem mittleren Molekulargewicht von 1 000 bis 10 000, insbesondere 2 000 bis 5 000.

Als weitere Polyalkylenpolyamine der vorstehend genannten Formel seien noch genannt :

e) Reine Polypropylenpolyamine und deren Gemische und

f) gemischte Polyäthylenpolypropylenpolyamine und deren Gemische, vor allem die durch ein- bzw. mehrmalige Umsetzung von Ethylendiamin bzw. Propylendiamin-1,3 mit Acrylnitril und jeweils nachfolgender Hydrierung erhalten sind, z. B. die mehrwertigen Amine der Formel

$$H_2N—[CH_2—CH_2—CH_2—NH]_x—H$$

wobei x eine ganze Zahl von 1 bis 10 bedeutet
sowie diejenigen der Formel

$$H[NH—CH_2—CH_2—CH_2]_m—NH—CH_2—CH_2—NH—[CH_2—CH_2—CH_2—NH]_mH$$

wobei m eine ganze Zahl von 1 bis 5 und n eine ganze Zahl von 0 bis 5 bedeutet, außerdem

g) die durch Kondensation von 1,2-Dichloräthan mit den unter e) und f) genannten Polyalkylenpolyaminen herstellbaren mehrwertigen Amine einem mittleren Molekulargewicht von 1 000 bis 10 000, insbesondere 2 000 bis 5 000.

Bei der Herstellung der erfindungsgemäßen wasserlöslichen Polyamine können die Mengenverhältnisse zwischen den basischen Polyamiden A und den Polyalkylenpolyaminen B in weiten Grenzen schwanken. Im allgemeinen sind solche Umsetzungsprodukte vorzuziehen, für deren Herstellung die Polyamide und die Polyäthylenpolyamine im Gewichtsverhältnes von 1 bis 10 : 10 bis 1, insbesondere von 1 bis 2,5 : 2,5 bis 1, vorzugsweise von 1 bis 1,8 : 1,8 bis 1 eingesetzt werden.

Die Mengenverhältnisse der polyfunktionellen Verbindung zu den beiden Komponenten A und B werden zweckmäßigerweise so bemessen, daß die zur Bildung des gewünschten Kondensationsgrades des wasserlöslichen Polyamins nicht wesentlich überschritten werden. Die Mindestmenge den gegenüber Aminogruppen polyfunktionellen Verbindung, die anzuwenden ist, um Einwirkungsprodukte mit dem gewünschten hohen Molekulargewicht bzw. Lösungen derselben mit der angestrebten Viskosität zu erhalten, ist hauptsächlich vom Molekulargewicht der beiden Komponenten abhängig und lässt sich durch Vorversuche von Fall zu Fall leicht feststellen.

Bevorzugt werden pro Mol basisches Stickstoffatom in den basischen Polyamiden und Polyalkylenpolyaminen 0,01-0,5 Mol, insbesondere 0,03-0,40 Mol, der polyfunktionellen Verbindungen verwendet.

Die Herstellung der erfindungsgemäßen Polyamine aus den basischen Polyamiden A und den Polyalkylenpolyaminen B kann nach an sich bekannten Verfahren erfolgen, z. B. dadurch, daß man Mischungen aus A, B und den gegenüber Aminogruppen polyfunktionellen Verbindungen C in wäßrigen Milieu bei pH Werten über 6 und bei Temperaturen zwischen 0 und 130 °C so lange rührt, bis eine Probe der Reaktionsmischung in Form einer 10 %-igen wäßrigen Lösung bei 25 °C eine Viskosität von mindestens 10 cP aufweist. Häufig ist es von Vorteil, wenn man zu der Mischung von A und B im wäßr. Milieu die polyfunktionellen Verbindungen unter sonst gleichen Reaktionbedingungen portionsweise nach und nach zusetzt bis die gewünschte Viskosität erreicht ist. Der Gehalt der Reaktionslösung an Einwirkungsprodukten, der vorzugsweise zwischen 10 und 30 Gewichtsprozent liegt, wird dann, falls die Reaktion bei einer höheren Konzentration durchgeführt wurde, durch Verdünnen mit Wasser auf den gewünschten Endwert eingestellt. In manchen Fällen ist es zur Beendigung der Einwirkung nach Erreichen der angestrebten Viskosität notwendig, den pH-Wert der Reaktionslösung durch Zugabe von Säuren, z. B. Salzsäure, Schwefelsäure, Phosphorsäure oder Essigsäure, auf pH 6, vorzugsweise auf 4 bis 5 einzustellen. Dies trifft vor allem für den Fall zu, daß die zur Bildung des gewünschten Kondensationsgrades des wasserlöslichen Polyamins erforderliche Mindestmenge an funktionellen Verbindungen erheblich überschritten worden ist.

Die Kondensation kann aber auch in einem geschlossenem Gefäß bei Temperaturen oberhalb des Siedepunktes der gegenüber Aminogruppen polyfunktionelle Verbindung C, insbesondere bei Verwendung von Dihalogenalkanen, vorzugsweise zwischen 90-130 °C bei Drucken bei 5 bar durchgeführt werden. Ein Abstoppen der Reaktion ist durch Zugabe von Säure hierbei normalerweise nicht erforderlich.

Die Gesamtkonzentration der Komponenten in der wäßrigen Reaktionsmischung sollte 10 bis 50 Gewichtsprozente betragen.

Bei der Herstellung der erfindungsgemäßen Reaktionsprodukte braucht die Umsetzung der polyfunktionellen Verbindung C nicht unbedingt mit einem Gemisch von A und B zu erfolgen. Es ist auch möglich, zunächst eine der beiden Komponenten A oder B mit der polyfunktionellen Verbindung C zu einem Vorkondensat reagieren zu lassen und dieses dann in zweiter Stufe mit der anderen Komponente umzusetzen.

Die erfindungsgemäßen Polyamine sind durch ein Mindestmolekulargewicht von 2 500, vorzugsweise 5 000, gekennzeichnet. Die obere Grenze ihres Molekulargewichtes ist durch ihre Eigenschaft, wasserlöslich zu sein, gegeben. Eine zahlenmäßige Beschreibung der oberen Grenze ihres Molekulargewichtes ist nicht möglich, da diese stark von den zugrundeliegenden Polyaminen und der Zahl der in ihnen enthaltenen wasserlöslich-machenden Gruppen abhängt.

Bei der Verwendung der erfindungsgemäßen Polyamine als Hilfsmittel zur Erhöhung der Retention von Fasern, Füllstoffen und Pigmenten sowie als Entwässerungsbeschleunigungsmittel geht man in an sich bekannter Weise so vor, daß man die erfindungsgemäßen Polyamine in Form verdünnter wäßriger Lösungen der Papierrohstoffsuspension vor dem Stoffauflauf zusetzt, wobei die Dosierstelle so gewählt wird, daß eine gute Verteilung des Hilfsmittels in der Rohstoffsuspension gesichert ist, aber eine zu lange Kontaktzeit vermieden wird. Die Mengen an Polyaminen, die zur Erzielung der gewünschten retentierenden Wirkung und/oder entwässerungsbeschleunigenden Wirkung erforderlich sind, lassen sich durch Vorversuche ohne Schwierigkeiten ermitteln ; im allgemeinen empfiehlt es sich, 0,005 bis 0,5 Gewichtsprozent an Polyaminen, bezogen auf das Trockengewicht des Papiers, zu verwenden. Der Zusatz von erfindungsgemäßen Polyaminen vor dem Stoffauflauf einer Papiermaschine wirkt sich außerdem vorteilhaft bei der Aufarbeitung der Papiermaschinenabwässer durch Filtration, Flotation oder Sedimentation aus ; die koagulierende Wirkung der erfindungsgemäßen Polyamine erleichtert die Abtrennung

von Papierstoffbestandteilen aus dem Papiermaschinenabwasser sehr wesentlich.

Bei der Verwendung der erfindungsgemäßen Polyamine als Hilfsmittel bei der Aufarbeitung von Papiermaschinenabwässern durch Filtration, Flotation oder Sedimentation kann man ebenfalls in an sich bekannter Weise vorgehen, bevorzugt in der Weise, daß man die in Betracht kommenden Umsetzungsprodukte in Form von verdünnten wäßrigen Lösungen dem Papiermaschinenabwasser zweckmäßig vor Eintritt in den Stoffängerzusetzt.

Die Mengen an Polyaminen, die eine ausreichende Koagulation der in Papiermaschinenabwässern enthaltenen Papierrohstoffbestandteile bewirken, sind nach der Zusammensetzung der Abwässer zu bemessen und lassen sich von Fall zu Fall durch Vorversuche leicht ermitteln ; im allgemeinen sind hierfür Mengen von 0,005 bis 2 g Polyamin pro $m^3$ Abwasser ausreichend.

Die erfindungsgemäßen Polyamine zeigen im Vergleich zu den bekannten, aus polyfunktionellen Verbindungen und entweder Polyamidaminen oder Polyäthylenpolyaminen allein hergestellten Umsetzungsprodukten (I und II) im Anwendungsbereich von pH 4,0-8,0 eine Steigerung der retendierenden Wirksamkeit sowie der Entwässerungsbeschleunigung. Während die Polyamidamin-Umsetzungsprodukte I im sauren Bereich von etwa 4-5 besser sind als die aus Polyäthylenpolyamin hergestellten II, ist dies im schwach sauren (pH 6,0) bis schwach alkalischen Milieu (pH 8,0) umgekehrt, dort sind die Polyäthylenpolyaminumsetzungsprodukte sogar bedeutend besser. Die erfindungsgemäßen Polyamine zeigen hingegen eine Wirksamkeit, die in allen pH-Bereichen den Spitzenwert des jeweils besseren Produktes zumindest erreichen. Dieser synergistische Effekt war nicht voraussehbar, da bei einem Einsatz von Mischungen von I und II nur die gemäß des Mischungsverhältnisses erreichenbaren Mittelwerte der beiden Produkte erzielt werden.

Die erfindungsgemäßen Polyamine sind stark holzschliff-haltigen Papierrohstoffen gegenüber im sauren pH-Bereich in der Entwässerungsbeschleunigung wirkungsvoller als die analogen säuregruppenfreien Polyamine sowie auch besser als die ebenso säuregruppenhaltigen Polyamine der DE-AS-2 156 215.

Aus der DE-AS-2 502 874 sind Retentionsmittel bekannt, die wie die erfindungsgemäßen Polyamine aus Polyamiden (A) und polyfunktionellen Verbindungen (c), aber nicht aus den Polyalkylenpolyaminen (B), sondern aus quaternären Stickstoff enthaltenden Polyaminen hergestellt werden. Bei den zuletzt genannten Polyaminen handelt es sich um Umsetzungsprodukte aus sekundären Aminhydrochloriden, Epichlorhydrin und mehrwertigen Aminen. Gegenüber diesen Retentionsmitteln zeigen die neuen Polyamine eine hohe Entwässerungsbeschleunigung.

Die Verbindungen gemäß vorliegender Patentanmeldung zeigen weiterhin eine weitaus größere Wirkung als Retentionsmittel bei der Papierherstellung als die aus DE-OS-1 771 043 and DE-OS-1 906 450 bekannten Produkte.

Einige erfindungsgemäße Polyamine und ihre Verwendung zur Erhöhung der Retention von Fasern, Füllstoffen und Pigmenten sowie zur Entwässerungsbeschleunigung bei der Papierherstellung sind nachstehend beispielsweise beschrieben.

## Herstellungsbeispiele

### Herstellung der Polamidamine A

Polyamidin 1

In einem Reaktionsgefäß mit Gaseinleitungsrohr und absteigendem Kühler werden 108 g (1,05 Mol) Diäthylentriamin mit 146 g (1 Mol) Adipinsäure unter Zusatz von 9 g (0,05 Mol) Adipinsäuredihydrazid vermischt, und das Gemisch wird unter Rühren und Uberleiten von sauerstoffreiem Stickstoff innerhalb von 3-4 Stunden auf 190 °C erhitzt, wobei die Reaktionstemperatur im Bereich von150-190 °C in dem Maße erhöht wird, daß das entstehende Wasser gleichmäßig abdestilliert. Nachdem etwa 30 g Wasser und geringe Mengen Diäthylentriamin überdestilliert sind, wird das Reaktionsgemisch noch so lange bei 190-180 °C unter vermindertem Druck (20-50 mm/Hg) gerührt, bis insgesamt 44 g Destillat angefallen sind, dann auf 130 °C abgekühlt und mit der gleichen Gewichtsmenge (219 g) Wasser versetzt. Das gebildete basische Polyamid wird so in Form einer 50 % wäßrigen Lösung erhalten, die eine Viskosität von 300-400 cP bei 25 °C und ein Äquivalentgewicht von 340 besitzt.

Polyamidamin 2

108 g (1,05 Mol) Diäthylentriamin, 146 g (1,0 Mol) Adipinsäure und 28 g (0,25 Mol) ε-Caprolactam werden unter Zugabe von 9 g (0,05 Mol) Adipinsäure-dihydrazid, wie bei der Herstellung des Polyamidamins 1 beschrieben, zu dem entsprechenden basischen Polyamid umgesetzt. Die auf Zugabe der gleichen Gewichtsmenge Wasser erhaltene 50 %-ige Polyamidlösung besitzt eine Viskosität von 400-500 cP bei 25 °C und ein Äquivalentgewicht von 400.

Polyamidamin 3

191 g (1,1 Mol) N,N'-Bis-(3-aminopropyl)-äthylendiamin u. 146 g (1,0 Mol) Adinpsäure werden unter Rühren und Überleiten von sauerstoffreiem Stickstoff innerhalb von 3-4 Stunden auf 200 °C erhitzt, wobei die Reaktionstemperatur im Bereich von 150-200 °C in dem Maße erhöht wird, daß das

entstehende Wasser gleichmäßig abdestilliert. Anschließend beläßt man die Temperatur noch 3 Stunden auf 200 °C. Danach wird auf etwa 120 °C abgekühlt und setzt dann soviel Wasser zu, daß eine 50 %-ige wäßrige Lösung des basischen Polyamids gebildet wird-nötig sind dazu 297 g. Die Polyamidlösung besitzt eine Viskosität von 722 mPa s bei 25 °C und ein Aminäquivalent von 274.

Polyamidamin 4

145 g (1,0 Mol- Bis-(3-aminopropyl)-methylamin und 117 g (0,8 Mol) Adipinsäure werden unter Zugabe von 2 g (0,01 Mol) Adipinsäure-dihydrazid, wie bei der Herstellung des Polyamidamins 1 beschrieben, zu dem entsprechenden basischen Polyamid umgesetzt. Die auf Zugabe der gleichen Gewichtsmenge Wasser (221 g) erhaltene 50 %ige Polyamidlösung besitzt eine Viskosität von 416 mPa s bei 25 °C und ein Äquivalentgewicht von 360.

Polyamidamin 5

206 g Diäthylentriamin (2,0 Mol) und 146 g (1,0 Mol) Adipinsäure werden, wie bei der Herstellung des Polyamidamins 1 beschrieben, zu dem entsprechenden basischen Polyamid umgesetzt. Die auf Zugabe der gleichen Gewichtsmenge Wasser (231 g) erhaltene 50 %ige Polyamidlösung besitzt eine Viskosität von 165 mPa s bei 25 °C und ein Äquivalentgewicht von 248.

Polyamidamin 6

Zu 277 g (1,35 Mol) des unter B/2 erwähnten Polyäthylenpolyamingemisches mit einem Amin-Val von 43,7 und einem mittleren Molekulargewicht von 205 werden unter Rühren 146 g (1,0 Mol) Adipinsäure so schnell zugegeben, daß die Temperatur infolge Neutralisationswärme auf 125-135 °C ansteigt. Die klare Schmelze des Salzes wird darauf unter Überleiten eines schwachen Stickstoffstromes innerhalb von 3 Stunden auf 195-200 °C erhitzt und diese Temperatur noch 3 Stunden bei behalten. Die Polykondensation ist dabei unter Übergang von 46 g Wasser und 1 g niedrigsiedender Polyäthylenpolyamine beendet. Das Umsetzungsprodukt wird dann auf etwa 130 °C abgekühlt und bei dieser Temperatur werden 376 g Wasser schnell zugesetzt. Es bildete sich dabei eine klare, gelbe 50 %ige wäßrige Lösung des Polyamids, die eine Viskosität von 251 mPa s bei 25 °C und eine Aminäquivalentgewicht von 159 besitzt.

Herstellung bzw. Zusammensetzung der Polyalkylenpolyamine B

Polyalkylenpolyamin 1

Aus dem durch kontinuierliche Umsetzung von Dichloräthan, wäßrigem Ammoniak und Äthylendiamin im Molverhältnis von 1 : 17 : 0,4 bei 160-220 °C und 100 bar erhaltenem Reaktionsgemisch wird unter Druck zunächst das überschüssige Ammoniak abgetrennt und dann bei 130-135 °C mit überschüssiger 50 %iger Natronlauge die entstandenen Basen aus ihren Hydrochloriden in Freiheit gesetzt. Dabei destilliert der größte Teil des Wassers und des Äthylendiamins ab, währen sich die höhersiedenden Basen flüssig abscheiden. Das so erhaltene Basengemisch enthält neben 15-20 % Wasser und 3-5 % Äthylendiamin, etwa 15-20 % Diäthylentriamin, 2-3 % Aminoäthylpiperazin, ~ 1 % $NH_2—CH_2CH_2—NHCH_2CH_2—OH$, 15-18 % Triäthylentetramin, 3-4 % Tetraäthylentetramin, 10-14 % Tetraäthylenpentamin, 6-10 % Pentaäthylehexamin, sowie rund 10-15 % höhere Polyäthylenpolyamine und geringe Mengen un Kochsalz und Natriumhydroxid.

Polyalkylenpolyamin 2

Aus dem gemäß Beispiel 1 erhaltenen Basengemisch wird zunächst unter Normaldruck, dann unter vermindertem Druck von etwa 100 mbar das restliche Wasser, Äthylendiamin sowie der größte Teil des Diäthylentriamins abdestilliert und das sich abscheidende Kochsalz durch Filtration entfernt.

Polyalkylenpolyamin 3

Aus dem gemäß Beispiel 1 erhaltenen Basengemisch wird außer Wasser, Äthylendiamin und Diäthylentriamin auch noch der größte Teil des Triäthylentetramins bei einem Endvakuum von etwa 10-15 Torr destillativ agbetrennt und die sich abscheidenden Aorganika ebenfalls durch Filtration entfernt, wobei die Filtration durch Zusatz von Kieselgur erleichtert und das Amingemisch durch Verwendung von A-Kohle zudem merklich aufehellt werden kann.

Polyalkylenpolyamin 4

Eine Mischung von 180 g Äthylendiamin und 750 g Pentaäthylenhexamin in 1 100 ml Wasser wird unter Rückflußkühlung innerhalb von 3 Stunden bei 80 °C mit 450 g 1,2-Dichloräthan versetzt und anschließend noch 1 Stunde bei dieser Temperatur belassen. Die 42,3 %ige Amin-Lösung kann anschließend noch 1 Stunde bei dieser Temperatur belassen. Die 42,3 %ige Amin-Lösung kann anschließend ohne Isolierung der oligomeren Polyäthylenpolyamine gemeinsam mit den Polyamidaminen mit polyfunktionellen Verbindungen umgesetzt werden.

Polyalkylenpolyamin 5

Das oligomere Polyalkylenpolyamingemisch wird nicht aus den reinen Polyäthylenpolyaminen bzw.

seiner Gemische hergestellt, wie dies bei B/4 erfolgt, sondern aus dem Polyäthylenpolyamingemisch B/1 mit einem Wassergehalt von 17 %. Dieses wird unter Zusatz der 0,8-fachen Gewichtsmenge Wasser bei 30 bar zwischen 60 und 130 °C kontinuierlich mit der 0,35-fachen Gewichtsmenge an 1,2-Dichloräthan versetzt. Das mittlere Molekulargewicht der so erhaltenen 42,8 %igen wäßrigen Lösung des oligomeren Polyäthylenpolyamingemisches liegt bei etwa 2 300.

Polyalkylenpolyamin 6

Analog B/5 wird das unter B/3 erhaltene Basengemisch nach Verdünnen mit 3 Teilen Wasser mit 0,3 Teilen 1,2-Dichloräthan kontinuierlich umgesetzt. Es wird eine 25 %ige wäßrige Lösung eines oligomeren Polyäthylenpolyamingemisches mit einem mittleren Molekulargewicht von etwa 1 000 erhalten.

Polyalkylenpolyamin 7

Eine Mischung aus 1 Teil Äthylendiamin und 1 Teil Wasser wird mit 0,4 Teilen Dichloräthan kontinuierlich bei 60 bis 130 °C und 60 bar Druck umgesetzt. Das erhaltene Reaktionsgemisch wird bei 135 °C mit überschüssiger 50 %iger Natronlauge versetzt, wobei das Wasser sowie das nicht umgesetzt Äthylendiamin abdestilliert. Die höhersiedenden Basen, im wesentlichen eine Mischung aus Triäthylentetramin, Pentaäthylenhexamin, Heptaäthylenoktamin, sowie geringe Mengen noch höher kondensierter Polyäthylenpolyamine, werden in flüssiger Form abgeschieden.

Polyalkylenpolyamin 8

Wie bei der Herstellung von B/7, jedoch mit dem Unterschied, daß anstelle von Äthylendiamin Propylendiamin (1,2) verwendet wird.

Umsetzungsprodukte von Polyamidaminen A und Polyalkylenpolyaminen B mit polyfunktionellen Verbindungen C zu den erfindungsgemäßen « Polyaminen ».

Polyamin 1

a) Eine Mischung aus 30,7 g des unter B/1 erwähnten Polyalkylenpolyamingemisches mit einem Wassergehalt von 17 % und einem Amin-Val von 48,6 und 50 g der unter A/1 beschriebenen 50 %igen Polyamidamin-Lösung und 70 ml Wasser wird bei 30 °C unter Rühren innerhalb von 15 Min. tropfenweise mit 25,5 g Epichlorhydrin versetzt und anschließend unter Rühren auf 65-70 °C erwärmt. Sobald die Lösung bei dieser Temperatur eine Viskosität von etwa 150-200 mPa s aufweist, was nach etwa 2 bis 3 Stunden der Fall ist, wird sie mit 118,8 g Wasser versetzt und bei 70 °C noch so lange gerührt, bis die Viskosität der Lösung nicht mehr zunimmt (etwa 8 Stunden). Die so erhaltene 22,5 %ige Lösung des Polyamins weist bei 25 °C eine Viskosität von 526 mPa s auf.

b) Setzt man anstelle von 25,5 g Epichlorhydrin 26,5 g Epichlorhydrin ein, so muß man bei Erreichen der gewünschten Viskosität mit Salzsäure auf pH 4-5 einstellen, um ein lagerstabiles Produkt zu erhalten.

Polyamin 2

Bei einer Temperatur von 87-93 °C wird der Mischung aus 13,5 kg der unter A/1 beschriebenen 50 %igen Polyamidamin-Lösung und 12,0 kg des unter B/1 erwähnten Polyäthylenpolyamingemisches mit einem Wassergehalt von 17 % und einem Amin-Val von 48,6 und 25,6 kg Wasser unter sehr gutem Rühren so schnell 7,7 kg 1,2-Dichloräthan zugesetzt, daß unter leichtem Sieden des 1,2-Dichloräthans der Temperaturbereich von 87-93 °C gehalten werden kann (Dauer ~ 7 Stunden). Während der Zugabe des 1,2-Dichloräthans werden außerdem noch 7,7 kg 50 %ige Natronlauge zugesetzt, und zwar in einer Geschwindigkeit daß ihr Zusatz etwa mit einem halben Liter Verzögerung dem des 1,2-Dichloräthans, ebenso auf Liter bezogen, folgt. Zunächst wächst die Viskosität nur sehr langsam, in der letzten Phase schneller an. Die Polykondensation wird zu dem Zeitpunkt durch Zusatz von Säure abgebrochen, in dem die Viskosität so hoch ist, daß sich nach Fertigstellung des Polyamins eine Viskosität von 350-500 mPa s als 22,5 %ige Lösung ergibt. Zunächst werden unter Kühlung 12,50 kg konz. Salzsäure/$H_2O$ = 2 : 1 schnell zugesetzt und danach noch so viel konz. Salzsäure, daß ein pH-Wert von 4,0 erreicht wird-etwa 3,20 kg. Während des Abkühlens wird noch 1-2 Stunden unter vermindertem Druck (50 Torr) gerührt, um nicht umgesetztes 1,2-Dichloräthan zu entfernen. Zuletzt wird noch soviel Wasser zugesetzt, daß eine 22,5 %ige Lösung des Polyamins erhalten wird.

Polyamin 3

In einem Reaktionsgemäß mit Rückflußkühler wird ein Gemisch aus 30 g des unter B/3 erwähnten Polyäthylenpolyamingemisches mit einem Amin-Val von 43,7, 40 g der unter A/1 beschriebenen 50 %igen wäßrigen Polyamidamin-Lösung, 125 g Wasser und 19 g 1,2-Dichloräthan solange auf 80 bis 90 °C gerührt, bis die Viskosität der Reaktionslösung auf etwa 480 mPa s bei 85 °C angestiegen ist (etwa nach 11 Stunden). Hierauf wird die Lösung mit 29,5 konz. Salzsäure und 1,1 g Wasser versetzt und abgekühlt. Die so erhaltene 22,5 %ige wäßrige Lösung des gebildeten Polyamins weist einen pH-Wert von 4,5 und bei 25 °C eine Viskosität von 405 mPa s auf.

Polyamin 4

Ein Gemisch aus 30 g des unter B/3 erwähnten Polyäthylenpolyamingemisches mit einem Amin-Val von 43,7, 40 g der unter A/1 beschriebenen 50 %igen wäßrigen Polyamidamin-Lösung, 125 g Wasser und 22,4 g Epichlorhydrin wird bei 70-75 °C solange gerührt, bis die Viskosität auf etwa 700 mPa s bei 70 °C angestiegen ist (etwa 2 bis 3 Stunden). Nach Zugabe von 34,8 g konz. Salzsäure und 23,à g Wasser wird eine 22,5 %ige Lösung des Polyamins erhalten, die eine Viskosität von 480 mPa s bei 25 °C und einen pH-Wert von 3,3 aufweist.

Analoge Produkte, die annähernd die gleiche Wirksamkeit als Retentions- sowie Entwässerungsbeschleunigungsmittel aufweisen, werden erhalten, wenn anstelle von Epichlorhydrin folgende polyfunktionelle Substanzen eingesetezt werden :

$$Cl-CH_2-CH_2-NH-CO-NH-CH_2--CH_2-Cl$$

$$Cl-CH_2-CH_2-NH-CO-CH_2-Cl$$

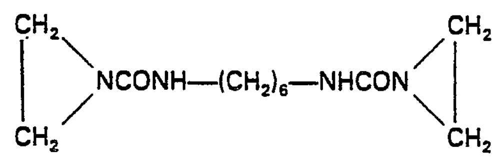

Polyamin 5

In einem Reaktionsgemäß mit Rückflußkühler wird ein Gemisch aus 30,1 g des unter B/1 erwähnten Polyäthylenpolyamingemisches mit einem Wassergehalt von 17 % und einem Amin-Val von 48,6, 50 g der unter A/1 beschriebenen 50 %igen wäßrigen Polyamidamin-Lösung, 100 g Wasser und 24,5 g 1,2-Dichloräthan solange auf 80-85 °C gerührt, bis die Viskosität der Reaktionslösung auf etwa 650 mPa s bei 80 °C angestiegen ist (etwa nach 16 Stunden). Danach wird die Lösung abgekühlt und gleichzeitig mit Salzsäure bis zu einem pH-Wert von 5,0 eingestellt, wozu 26,3 g konz. Salzsäure benötigt wurden. Nach Zusatz von 24,5 g Wasser zeigt die erhaltene 22,5 %ige Polyamin-Lösung eine Viskosität von 505 mPa s bei 25 °C auf.

Polyamin 6

Das Polyamin wird analog Polyamin 5 aus 68 g Polyamidamin $A_1$, 20,5 g B/1, 100 g Wasser und 17 g 1,2-Dichloräthan hergestellt (Reaktionsdauer 11 Stunden). Nach Zusatz von 26,1 g konz. Salzsäure (pH 4,0) und 19,4 g Wasser erhält man eine 22,5 %ige wäßrige Lösung, die eine Viskosität von 485 mPa s bei 25 °C hat.

Polyamin 7

Das Polyamin wird analog Polyamin 4 aus 30 g des unter B/2 erwähnten Polyäthylenpolyamingemisches mit einem Amin-Val von 43,7, 40 g der unter A/1 beschriebenen 50 %igen wäßrigen Lösung des Polyamidamins, 125 g Wasser und 26,9 g Epichlorhydrin hergestellt (Reaktionsdauer 3-4 Stunden). Nach Zusatz von 34,9 g konz. HCl (pH 3,3) und 37,9 g Wasser erhält man eine 22,5 %ige wäßrige Lösung, die eine Viskosität von 470 mPa s bei 25 °C hat.

Produkte mit gleicher Viskosität und Wirksamkeit werden erhalten, wenn anstelle von Epichlorhydrin folgende polyfunktionellen Substanzen eingesetzt werden :

$$Cl-CH_2-CO-NH-CH_2-CH_2-NH-CO-CH_2-Cl$$

Butan-1,4-bis-glycidyläther

Triglycidyläther aus 1 Mol Trimethylolpropan,
10 Mol Äthylenoxid u. 3 Mol Epichlorhydrin.

Polyamin 8

Das Polyamin wird analog Polyamin 3 aus 25 g des unter B/2 erwähnten Polyäthylenpolyamingemisches mit einem Amin-Val von 43,7, 50 g der unter A/1 beschriebenen 50 %igen wäßrigen Lösung des Polyamidamins, 20 g 1,2-Dichloräthan und 120 ml Wasser hergestellt (Reaktionsdauer etwa 8-9 Stunden). Nach Zusatz von 24,5 g konz. Salzsäure und 6,1 g Wasser wird eine 22,5 %ige wäßrige Lösung erhalten, die eine Viskosität von 470 mPa s bei 25 °C und einen pH-Wert von 5,0 aufweist.

Polyamin 9

Das Polyamin wird analog Polyamin 5 aus 41 g des unter B/1 erwähnten Polyäthylenpolyamingemisches mit einem Wassergehalt von 17 % und einem Amin-Val von 48,6, 34 g der unter A/1 beschriebenen 50 %igen wäßrigen Polyamidamin-Lösung, 35 g 1,2-Dichloräthan und 100 g Wasser hergestellt (Reaktionsdauer 20 Stunden). Nach Zusatz von 23,6 g konz. Salzsäure und 33,5 g Wasser wird eine 22,5 %ige Lösung mit einer Viskosität von 545 mPa s bei 25 °C und einem pH-Wert von 5,0 erhalten.

Polyamin 10

Das Polyamin wird analog Polyamin 3 aus ebenso 30 g des unter B/3 erwähnten Polyäthylenpolyamingemisches, jedoch mit 40 g der unter A/2 beschriebenen 50 %igen wäßrigen Polyamidamin-Lösung, 125 g Wasser und 17 g 1,2-Dichloräthan hergestellt. Nach Zusatz von 26 g konz. Salzsäure und 4,2 g Wasser wird eine 22,5 %ige wäßrige Lösung des Polyamins mit einer Viskosität von 470 mPa s bei 25 °C und einem pH-Wert von 5,0 erhalten.

Polyamin 11

Das Polyamin wird analog Polyamin 5 aus ebenso 30,1 g des unter B/1 erwähnten Polyäthylenpolyamingemisches, jedoch mit 50 g der unter A/3 beschriebenen 50 %igen wäßrigen Lösung des Polyamidamins, 100 g Wasser und 22,5 g 1,2-Dichloräthan hergestellt. Nach Zusatz von konz. Salzsäure bis zu einem pH-Wert von 5,0 und Wasser bis zu einem Gehalt von 22,5 % des Polyamins hat das Umsetzungsprodukt eine Viskosität von 720 mPa s bei 25 °C.

Polyamin 12

Das Polyamin wird analog Polyamin 11 mit Polyamidamin A/4 statt mit A/3 hergestellt.

Viskosität 330 mPa s/22,5 %ig/25 °C.

Polyamin 13

Das Polyamin wird analog Polyamin 4 aus 30 g des unter B/2 erwähnten Polyäthylenpolyamingemisches mit einem Amin-Val von 43,7, 40 g der unter A/5 beschriebenen 50 %igen wäßrigen Polyamidamin-Lösung. 125 g $H_2O$ und 25,0 g Epichlorhydrin hergestellt (Reaktionsdauer etwa 4 Stunden). Nach Zugabe von konz. Salsäure bis zu einem pH-Wert von 4,5 und Wasser bis zu einer 22,5 %igen Lösung des Polyamins zeigt das Produkt eine Viskosität von 435 mPa s bei 25 °C.

Polyamin 14

Das Polyamin wird analog Polyamin 1 a mit Polyamidamin A/6 statt mit A/1 hergestellt. Die für 1 a angegebenen Gewichtsmengen bleiben dabei in derselben Größenordnung.

Viskosität 465 mPa s/22,5 %ig/25 °C.

Polyamin 15

Das Polyamin wird analog Polyamin 3 aus 114,1 g der unter B/6 beschriebenen 25 %igen wäßrigen Lösung des oligomeren Polyäthylenpolyamins, 40 g der unter A/1 beschriebenen 50 %igen wäßrigen Polyamidamin-Lösung, 57 g Wasser, 6 g 50 %ige Kalilauge und 9,2 g 1,2-Dichloräthan hergestellt.

Viskosität 455 mPa s (22,5 %ig), pH-Wert 4,5.

Polyamin 16

Das Polyamin wird analog Polyamin 4 aus 75,4 g der unter B/5 beschriebenen 50 %igen wäßrigen Lösung des oligomeren Polyäthylenpolyamins, 40 g der unter A/1 beschriebenen 50 %igen wäßrigen Polyamid-Lösung, 110 g Wasser und 6,2 g Epichlorhydin hergestellt. Reaktionsdauer etwa 1-2 Stunden.

Viskosität 465 mPa s (22,5 %ig), pH-Wert 3,3.

Polyamin 17

Das Polyamin wird analog Polyamin 4 aus 25,5 g Pentaäthylenhexamin, 50 g der unter A/1 beschriebenen 50 %igen wäßrigen Lösung des Polyamidamins, 125 g Wasser und 17,3 g Epichlorhydrin hergestellt. Nach Zugabe von 40,6 g konz. Salzsäure und 12,7 g Wasser erhält man eine 22,5 %ige Lösung, die eine Viskosität von 515 mPa s bei 25 °C und einen pH-Wert von 3,3 aufweist.

Polyamin 18

Das Polyamin wird analog Polyamin 4 aus 25,5 g Tetraäthylenpentamin, 50 g der unter A/1 beschriebenen 50 %igen wäßrigen Lösung des Polyamidamins, 125 g Wasser und 20,6 g Epichlorhydrin hergestellt. Nach Zugabe von 27 g konz. Salzsäure und 31,9 g Wasser erhält man eine 22,5 %ige Lösung mit einem pH-Wert von 6,6 und einer Viskosität von 405 mPa s bei 25 °C.

Polyamin 19

Eine Mischung aus 1,2 kg des unter B/1 erwähnten Polyäthylenpolyamingemisches mit einem Wassergerhalt von 17 % und einem Amin-Val von 48,6, 1,35 kg der unter A/1 beschriebenen 50 %igen wäßrigen Polyamidamin-Lösung und 4,2 kg Wasser werden in einem verschließbaren Gefäß auf 75 °C erwärmt und dann bei geschlossener Entlüftung portionsweise mit 1,2-Dichloräthan unter gutem Rühren versetzt. Dabei erweist es sich von Vorteil, wenn das Dichloräthan möglichst fein verteilt unter der Oberfläche der Reaktionsmischung eingegeben wird, z. B. durch eindüsen. Die Temperatur der Reaktionsmischung soll im Laufe der Umsetzung auf 115-120 °C ansteigen. Der pH-Wert der Reaktionsmischung wird durch Zugabe von 50 %iger Natronlauge auf einem Wert zwischen 7,5 und 8,5 gehalten (nötig sind etwa 0,80 kg). Beim Erreichen einer Viskosität von 1 000 mPa s bezogen auf 25 °C wird die

Zugabe des 1,2-Dichloräthans beendet-Gesamtverbrauch etwa 0,79 kg. Nach einer Nachrühzeit von rund 30 Minuten wird das Reaktionsgefäß entspannt und durch Anlegen eines Vakuums von 200-25 mbar die Reaktionsmischung auf 60-70 °C abgekühlt. Die so erhaltene Reaktionsmischung ist auch ohne Zugabe von Säure lagerstabil. Sie weist bei einer 22,5 %igen Einstellung eine Viskosität von 500 mPa s bei 25 °C auf.

## Beispiel 1

Auf einer Laborpapiermaschine (Typ Kämmerer) wurden aus 70 % gebleichtem Nadelholzsulfitzellstoff und 30 % gebleichtem Buchensulfatzellstoff Papiere (circa 80 g/m²) hergestellt. Dabei wurde einmal im sauren Bereich, zum anderen bei neutralen pH-Werten gearbeitet :

a) Saurer Bereich :
Zusatz von
30 % China Clay als Füllstoff,
1 % Harzleim und
3 % Aluminiumsulfat
zur Papiermasse. Der pH-Wert wurde mit Schwefelsäure auf 4,8 eingestellt.

b) Neutraler Bereich ;
Zusatz von
30 % Calcium carbonat als Füllstoff,
1 % Aquapel 360 XZ (synthetischer Leim auf Basis Stearyldiketen von Fa. Hercules Inc.) zur Papiermasse. Der pH-Wert wurde mit Natronlauge auf 7,8 bis 8 eingestellt.

Vor dem Stoffauflauf der Papiermaschine wurden mittels Dosierpumpe die 1 %igen wäßrigen Lösungen der 22,5 %igen Polyamine 1 bis 19 zudosiert. Zum Vergleich wurden ebenfalls 1 %ige Verdünnungen der bekannten Retentionsmittel Polyamidamin I (I a Beispiel 1 DE-PS-1 771 814 und I b Beispiel 1 GB-PS-1 035 296) beziehungsweise des bekannten Retentionsmittels Polyäthylenpolyamin II (Beispiel 1 DE-OS-2 351 754) sowie Mischungen von Ia : II im Verhältnis von 75 : 25 %, 50 : 50 % sowie 25 : 75 % zudosiert.

Als Maß für die Retentionswirkung wurde der Feststoffgehalt im Abwasser der Papiermaschine bestimmt. Je geringer dieser Feststoffgehalt, umso besser ist die Retentionswirkung.

Die folgende Tabelle 1 veranschaulicht, daß die erfindungsgemäßen Polyamine sowohl im sauren wie im neutralen Bereich eine sehr gute Retentionswirkung besitzen und daß diese besser ist als diejenige, die bei Einsatz von Mischungen von Polyamidamin- und Polyätherpolyamin-Retentionsmitteln erhalten wird. Die Zusatzmengen beziehen sich jeweils auf das Gewicht des lufttrokkenen Zellstoffes sowie auf die 22,5 %ige Lösung des Retentionsmittels.

Tabelle 1

| Retentionsmittel | Zusatzmenge [%] | Trockenrückstand im Abwasser [mg/l] a) saurer Bereich pH 4,8 | b) neutraler Bereich pH 7,8 |
|---|---|---|---|
| ohne | | 638 | 793 |
| Polyamin 1 | 0,1% | 185 | 180 |
| Polyamin 2 | 0,1% | 165 | 161 |
| Polyamin 3 | 0,1% | 191 | 187 |
| Polyamin 4 | 0,1% | 194 | 190 |
| Polyamin 5 | 0,1% | 171 | 168 |
| Polyamin 6 | 0,1% | 188 | 195 |
| Polyamin 7 | 0,1% | 183 | 176 |
| Polyamin 8 | 0,1% | 163 | 155 |
| Polyamin 9 | 0,1% | 180 | 156 |
| Polyamin 10 | 0,1% | 177 | 173 |
| Polyamin 11 | 0,1% | 174 | 171 |
| Polyamin 12 | 0,1% | 168 | 165 |
| Polyamin 13 | 0,1% | 160 | 151 |
| Polyamin 14 | 0,1% | 162 | 153 |
| Polyamin 15 | 0,1% | 157 | 149 |
| Polyamin 16 | 0,1% | 159 | 150 |
| Polyamin 17 | 0,1% | 197 | 192 |
| Polyamin 18 | 0,1% | 198 | 195 |
| Polyamin 19 | 0,1% | 162 | 156 |

Tabelle 1 (Fortsetzung)

| Retentionsmittel | | Zusatzmenge [%] | Trockenrückstand im Abwasser [mg/l] a) saurer Bereich pH 4,8 | b) neutraler Bereich pH 7,8 |
|---|---|---|---|---|
| Ia | | 0,1% | 198 | 392 |
| Ib | | 0,1% | 212 | 433 |
| II | | 0,1% | 213 | 195 |
| Gemisch | 75% Ia<br>25% II | 0,1% | 204 | 347 |
| Gemisch | 50% Ia<br>50% II | 0,1% | 207 | 297 |
| Gemisch | 25% Ia<br>75% II | 0,1% | 210 | 249 |

Beispiel 2

Als Maß für die auf einer Papiermaschine der Praxis zu erwartende Entwässerungsbeschleunigung wurde der Mahlgrad nach Schopper-Riegler bestimmt. Je stärker der Mahlgrad durch das zugesetzte Retentionsmittel erniedrigt wird, umso besser ist die zu erwartende Entwässerungsbeschleunigung.

Gemischtes Altpapier wurde am Schnellrührer aufgeschlagen und der pH-Wert eingestellt :

a) Saurer Bereich :

Zusatz von 0,5 % Aluminiumsulfat, Einstellung von pH 4,5 mit Schwefelsäure.

b) Neutraler Bereich :

Einstellung von pH 7,2 mit Natronlauge

Zu 200 ml der nach a) oder b) vorbereiteten 1 %igen Papierstoff-Suspension wurde jeweils die 1 %ige Lösung mit Wasser auf 1 000 ml aufgefüllt und mit Hilfe des Schopper-Riegler-Gerätes der Mahlgrad bestimmt.

Die Zusatzmengen beziehen sich jeweils auf das Gewicht des lufttrockenen Papierstoffes sowie auf die 22,5 %ige Lösung der Polyamine 1 bis 19.

Die folgende Tabelle 2 veranschaulicht den guten Entwässerungseffekt der erfindungsgemäßen Polyamine sowohl im sauren wie im neutralen Bereich. Zum Vergleich wurden ebenfalls die im Beispiel 1 angeführten bekannte Retentionsmittel sowie ihre Mischungen zudosiert.

Tabelle 2

| Entwässerungs-beschleunigungs-mittel | Zusatzmenge [%] | Mahlgrad [°SR] a) saurer Bereich pH 4,5 | b) neutraler Bereich pH 7,3 |
|---|---|---|---|
| ohne | | 58 | 64 |
| Polyamin 1 | 0,4% | 48 | 42 |
| Polyamin 2 | 0,4% | 47 | 41 |
| Polyamin 3 | 0,4% | 49 | 42 |
| Polyamin 4 | 0,4% | 49 | 43 |
| Polyamin 5 | 0,4% | 48 | 42 |
| Polyamin 6 | 0,4% | 49 | 43 |
| Polyamin 7 | 0,4% | 48 | 42 |
| Polyamin 8 | 0,4% | 47 | 40 |
| Polyamin 9 | 0,4% | 49 | 42 |
| Polyamin 10 | 0,4% | 48 | 41 |
| Polyamin 11 | 0,4% | 48 | 41 |
| Polyamin 12 | 0,4% | 48 | 40 |
| Polyamin 13 | 0,4% | 46 | 40 |
| Polyamin 14 | 0,4% | 46 | 40 |
| Polyamin 15 | 0,4% | 45 | 39 |
| Polyamin 16 | 0,4% | 45 | 40 |
| Polyamin 17 | 0,4% | 49 | 42 |
| Polyamin 18 | 0,4% | 49 | 43 |
| Polyamin 19 | 0,4% | 47 | 42 |

Tabelle 2 (Fortsetzung)

| Entwässerungs-beschleunigungs-mittel | | Zusatzmenge [%] | Mahlgrad [°SR] a) saurer Bereich pH 4,5 | b) neutraler Bereich pH 7,3 |
|---|---|---|---|---|
| Ia | | 0,4% | 49 | 51 |
| Ib | | 0,4% | 50 | 52 |
| II | | 0,4% | 51 | 43 |
| Gemisch | 75% Ia<br>25% II | 0,4% | 49 | 49 |
| Gemisch | 50% Ia<br>50% II | 0,4% | 50 | 47 |
| Gemisch | 25% Ia<br>75% II | 0,4% | 51 | 45 |

Beispiel 3

Ein aus 70 Teilen Holzschliff und 30 Teilen halbgebleichtem Sulfatzellstoff bestehender Papierbrei, der am Schnellrührer augeschlagen wurde, wurde mit 40 % China-Clay udn 0,5 % Alaun versetzt und mit Schwefelsäure auf einen pH-Wert von 5,0 eingestellt.

Bei einer so vorbereiteten Papierstoff-Suspension, die 3 g Stoff in 1 000 ml Wasser enthielt, wurde im Schopper-Riegler-Gerät die Entwässerungszeit nach 700 ml Ablauf ermittelt. Die Zusatzmengen beziehen sich jeweils auf das Gewicht des lufttrockenen Papierstoffs, sowie auf dei 22,5 %ige Lösung der Polyamine. Die folgende Tabelle 3 veranschaulicht den guten Entwässerungseffekt der erfindungsgemäßen Polyamine.

Tabelle 3

| Entwässerungs-beschleunigungs-mittel | Zusatzmenge [%] | Entwässerungszeit [sec.] |
|---|---|---|
| ohne | | 157 |
| Polyamin 2 | 0,1 | 127 |
| | 0,2 | 97 |
| | 0,4 | 78 |
| Polyamin 8 aus | 0,1 | 137 |
| DE-OS 2 156 215 | 0,2 | 108 |
| | 0,4 | 89 |

**Patentansprüche**

1. Wasserlösliche Polyamine eines Molekulargewichtes von mindestens 2 500, erhalten durch Umsetzung von

A) einem oder mehreren in Wasser löslichen oder dispergierbaren basischen Polyamiden, die durch Kondensation von mindestens zwei primäre Aminogruppen und mindestens eine sekundäre oder tertiäre Aminogruppe enthaltenden aliphatischen Polyaminen oder von Mischungen aus diesen Polyaminen und aus zwei primäre oder zwei sekundäre Aminogruppen oder eine primäre und eine sekundäre Aminogruppe enthaltenden aliphatischen, cycloaliphatischen, araliphatischen oder heterocyclischen Polyaminen mit gesättigten aliphatischen, 4-10 Kohlenstoffatome enthaltenden Dicarbonsäuren bzw. mit deren funktionellen Derivaten und gegebenenfalls mit mindestens 3 Kohlenstoffatome enthaltenden ω-Aminocarbonsäuren oder deren Lactamen hergestellt worden sind,

B) einem oder mehreren Polyalkylenpolyamine und

C) 1,2-Dichloräthan oder Epichlorhydrin,

dadurch gekennzeichnet, daß als Komponente B Polyalkylenpolyamine der allgemeinen Formel

$$H_2N-[CH_2-\underset{R}{\underset{|}{C}}H-NH-]_xH,$$

in der
x eine Zahl von 4 bis 2 500 und
R H oder $CH_3$ bedeuten,
oder Mischungen dieser Polyalkylenpolyamine mit Aminen der allgemeinen Formel

$$H_2N-[CH_2-\underset{R}{\underset{|}{C}}H-(CH_2-)_yNH-]_{x_1}H,$$

in der
y gleich 0 ist und
$x_1$ eine Zahl von 1 bis 3 bedeutet,
verwendet werden, sich bei der Umsetzung praktisch alle funktionellen Gruppen umgesetzt haben, und daß entweder die Verbindung C mit einem Gemisch von A und B umgesetzt wird, oder eine der beiden Komponenten A oder B mit C zu einem Vorkondensat und dann mit der anderen Komponente A oder B umgesetzt wird.

2. Wasserlösliche Polyamine gemäß Anspruch 1, dadurch gekennzeichnet, daß als Polyalkylenpolyamine B die von Äthylendiamin befreiten, durch Umsetzung von 1,2-Dichloräthan mit wäßrigem Ammoniak in Gegenwart von Äthylendiamin erhaltenen Umsetzungsprodukte eingesetzt werden.

3. Wasserlösliche Polyamine gemäß Ansprüchen 1 bis 2, dadurch gekennzeichnet, daß als Polyalkylenpolyamine B die durch Kondensation von 1,2-Dichloräthan mit einem oder mehreren Polyäthylenpolyaminen der allgemeinen Formel

$$H_2N—[CH_2—CH_2—NH—]_xH,$$

in der x eine Zahl von 1 bis 15 bedeutet,
hergestellten Amine verwendet werden.

4. Wasserlösliche Polyamine gemäß Anspruch 1, dadurch gekennzeichnet, daß als Polyamide A Umsetzungsprodukte der Polyamine mit den Dicarbonsäuren im Molverhältnis 0,8-1,4 : 1 verwendet werden.

5. Wasserlösliche Polyamine gemäß Anspruchen 1-4, dadurch gekennzeichnet, daß pro Mol basisches Stickstoffatom in den basischen Polyamiden und Polyalkylenpolyaminen 0,01-0,5 Mol, insbesondere 0,03-0,40 Mol der polyfunktionellen Verbindungen verwendet werden.

6. Verwendung der wasserlöslichen Polyamine nach Anspruch 1 als Hilfsmittel zur Erhöhung der Retention von Fasern, Füllstoffen und Pigementen sowie als Entwässerungsbeschleunigungsmittel bei der Papierherstellung und zur Aufarbeitung von Papiermaschinenabwässern durch Filtration, Sedimentation und Flotation.

**Claims**

1. Water-soluble polyamines having a molecular weight of at least 2 500, obtained by reacting

A) one or more water-soluble or water-dispersible basic polyamides which have been prepared by condensation of aliphatic polyamines containing at least two primary amino groups and at least one secondary or tertiary amino group, or of mixtures of these polyamines and of aliphatic, cycloaliphatic, araliphatic or heterocyclic polyamines containing two primary or two secondary amino groups or one primary and one secondary amino group, with saturated aliphatic dicarboxylic acids containing 4-10 carbon atoms, or with functional derivatives thereof and optionally with ω-aminocarboxylic acids containing at least 3 carbon atoms, or lactams thereof,

B) one or more polyalkylenepolyamines and

C) 1,2-dichloroethane or epichlorohydrin,
characterised in that polyalkylenepolyamines of the general formula

$$H_2N-[CH_2-\underset{R}{\underset{|}{C}}H-NH-]_xH,$$

in which

x denotes a number from 4 to 2 500 and
R denotes H or $CH_3$,
or mixtures of these polyalkylenepolyamines with amines of the general formula

$$H_2N-[CH_2-\underset{R}{\underset{|}{C}}H-(CH_2-)_yNH-]_{x_1}H ,$$

in which
y is 0 and
$x_1$ denotes a number from 1 to 3,
are used as component B, and virtually all the functional groups have reacted during the reaction, and in that either compound C is reacted with a mixture of A and B, or one of the two components A or B is reacted with C to form a precondensate which is then reacted with the other component A or B.

2. Water-soluble polyamines according to Claim 1, characterised in that the reaction products obtained by the reaction of 1,2-dichloroethane with aqueous ammonia in the presence of ethylenediamine, which have been freed from ethylenediamine, are employed as the polyalkylenepolyamines B.

3. Water-soluble polyamines according to Claims 1 to 2, characterised in that the amines prepared by condensation of 1,2-dichloroethane with one or more polyethylenepolyamines of the general formula

$$H_2N—[CH_2—CH_2—NH—]_xH,$$

in which x denotes a number from 1 to 15, are used as the polyalkylenepolyamines B.

4. Water-soluble polyamines according to Claim 1, characterised in that reaction products of the polyamines with the dicarboxylic acids in the molar ratio 0.8-1.4 : 1 are used as the polyamides A.

5. Water-soluble polyamines according to Claims 1-4, characterised in that 0.01-0.5 mol, in particular 0.03-0.40 mol, of the polyfunctional compounds are used per mol of basic nitrogen atom in the basic polyamides and polyalkylenepolyamines.

6. Use of the water-soluble polyamines according to Claim 1 as auxiliaries for increasing the retention of fibres, fillers and pigments and as drainage accelerators during the production of paper and for working up effluents from paper machines by filtration, sedimentation and flotation.

**Revendications**

1. Polyamines solubles dans l'eau ayant un poids moléculaire d'au moins 2 500, obtenues par réaction

A) d'une ou plusieurs polyamides basiques solubles ou dispersibles dans l'eau qui sont préparées par condensation de polyamines aliphatiques contenant au moins deux groupes amino primaires et au moins un groupe amino secondaire ou tertiaire, ou de mélanges de ces polyamines, et à partir de polyamines aliphatiques, cycloaliphatiques, araliphatiques ou hétérocycliques contenant deux groupes amino primaires ou deux secondaires ou un groupe amino primaire et un secondaire, avec des acides dicarboxyliques aliphatiques saturés contenant 4-10 atomes de carbone ou leurs dérivés fonctionnels et éventuellement avec des acides ω-aminocarboxyliques contenant au moins 3 atomes de carbone ou leurs lactames,

B) d'une ou plusieurs polyalcoylène polyamines et

C) de 1,2-dichloréthane ou d'épichlorhydrine,

caractérisées en ce qu'on utilise comme composant B des polyalcoylènes polyamines de formule générale :

$$H_2N-[CH_2-\underset{R}{\underset{|}{C}}H-NH-]_xH,$$

dans laquelle
x représente un nombre de 4 à 2 500 et
R H ou $CH_2$,
ou des mélanges de ces polyalcoylènes polyamines, avec des amines de formule générale :

$$H_2N-[CH_2-\underset{R}{CH}-(CH_2-)_yNH-]_{x_1}H ,$$

dans laquelle

Y est égale à 0 et

$x_1$ signifie un nombre de 1 à 3,

en ce qu'au cours de la réaction pratiquement tous les groupes fonctionnels ont réagi, et en ce que, ou bien, le composé C est mis en réaction avec un mélange de A et B, ou bien, l'un des deux composants A ou B est mis à réagir avec C pour former un précondensat et puis est mis en réaction avec l'autre composant A ou B.

2. Polyamines solubles dans l'eau selon la revendication 1, caractérisées en ce qu'en tant que polyalcoylènes polyamines B on utilise les produits de réaction débarrassés de l'éthylène diamine, obtenus par réaction du 1,2-dichloréthane avec de l'ammoniaque aqueux en présence d'éthylène diamine.

3. Polyamines solubles dans l'eau selon les revendications 1 et 2, caractérisées en ce qu'on utilise comme polyalcoylènes polyamines B les amines préparées par condensation du 1,2-dichloréthane avec une ou plusieurs polyéthylènes polyamines de formule générale :

$$H_2N—[CH_2—CH_2—NH—]_xH,$$

dans laquelle x représente un nombre de 1 à 15.

4. Polyamines solubles dans l'eau selon la revendication 1, caractérisées en ce qu'on utilise comme polyamides A des produits de réaction des polyamines avec les acides dicarboxyliques dans le rapport molaire de 0,8-1,4 : 1.

5. Polyamines solubles dans l'eau selon les revendications 1 à 4, caractérisées en ce qu'on utilise par mole d'atome d'azote basique dans les polyamides basiques et les polyalcoylènes polyamines 0,01-0,5 mole, en particulier 0,03-0,40 mole des composés polyfonctionnels.

6. Utilisation des polyamines solubles dans l'eau selon la revendication 1 comme auxiliaires pour augmenter la rétention des fibres, des matières de charge et des pigments de même que comme accélérateurs de déshydratation dans la fabrication du papier et pour le traitement des eaux résiduaires de la machine à papier par filtration, sédimentation et flottation.